# EUROPEAN PATENT APPLICATION

(11) **EP 1 840 311 A1**
(43) Date of publication of application: **03.10.2007**
(21) Application number: 06006826.9
(22) Date of filing: 31.03.2006
(51) Int. Cl.: E05F 15/12

(54) **Adjusting device having a spindle drive**

(71) Applicant: Valeo Sicherheitssysteme GmbH, 85253 Erdweg (DE)
(72) Inventor: Kummer, Frank, 07751 Jena (DE); Kornev, Oleg, 85757 Karlsfeld (DE)
(74) Representative: Podszus, Burghart

(57) **Abstract**

The invention relates to an adjusting device (3), or a spindle actuator unit, having a spindle drive (11), in particular for automatically actuating the vehicle door (2) of a motor vehicle (1), the spindle drive (11) comprising a spindle (13), which can be rotated by an electric-motor drive (100), and a spindle nut (15) which, when the spindle (13) is rotated, can be displaced along the longitudinal axis (16) of the spindle (13) in a guide (24), from a retracted rest position into an extended position.

In order to provide an adjusting device (3) having a spindle drive (11) in which the said device can be constructed in a compact manner and can be produced and assembled cost-effectively and is also suitable for automatically actuating a vehicle door, in particular a tailgate (2), and in which it is possible, in the case of tailgate actuation, for the adjusting device (3) to be designed dimensionally in such a way that it can be arranged on the motor vehicle (1) in a similar manner to a gas spring used for opening the tailgate (2), the invention proposes a spindle drive (11) having a one-piece a tubular guide part (26) for guiding the spindle nut (15) which encloses the spindle nut (15) laterally. The lateral wall (25) of the guide part (26) is provided internally with a guide contour (24) which extends in the axial direction and in which guide lugs (23) of the spindle nut (15) engage. The tubular guide part (26) has at its front a peripheral, inwardly directed bead-shaped projection (27) which limits the displacement of the spindle nut (15).

## Description

The invention relates to an adjusting device having a spindle drive, in particular for automatically actuating the vehicle door of a motor vehicle, comprising the features of the preamble of Claim 1. In this context, "vehicle door" as used in the text below is understood to include, inter alia, not only the side doors but also the tail-gate or luggage compartment lid of a vehicle.

It is known for example from US 3,398,484 to use an adjusting device having a spindle drive for automatically opening and closing the side door of a motor vehicle, the spindle drive comprising a spindle, which can be rotated by an electric-motor drive, and a spindle nut which, when the spindle is rotated, can be displaced along the longitudinal axis of the spindle in a guide, from a retracted rest position into an extended position. The spindle here is received at each of its two ends by a pivot bearing. The spindle nut is guided by means of two guide lugs which engage through slot-shaped guides of a tubular guide part. In order to actuate the side door in this arrangement, it is required for the guide lugs of the spindle nut to be connected to a linkage arranged laterally outside of the guide tube, it then being possible for this linkage to be connected to the motor vehicle body.

Disadvantages with this known adjusting device are that its construction requires an extraordinary amount of space and the large number of individual parts of the spindle drive make assembly of the device a relatively time-consuming operation and thus make the device correspondingly cost-intensive.

DE 101 17 935 A1 discloses an adjusting device having a spindle drive for actuating the tailgate of a motor vehicle, in which device the spindle nut acts on the hinge strap of the tailgate via a linkage. This document does not give any detailed information on the structural design of the spindle nut guide and the linkage.

It is generally difficult to use the known adjusting devices for automatically actuating the tailgate of a motor vehicle while keeping outlay within acceptable limits if the adjusting device is intended to replace the gas spring conventionally provided for opening the tailgate. In this case, the production of the spindle drive, which is possibly composed of a large number of components, is not only very costly but also, on account of the high axial forces (up to 3000 N) to be transmitted, very space-consuming since the connections (pins, screws, welds, etc.) between the individual components must be of correspondingly bulky design. Moreover, the additionally required linkages would impede loading and unloading of the corresponding luggage compartment of the vehicle.

The object on which the invention is based is to provide an adjusting device having a spindle drive in which the said device can be constructed in a compact manner and can be produced and assembled cost-effectively and is also suitable for automatically actuating a vehicle door, in particular a tailgate, and in which it is intended, in the case of tailgate actuation, for the adjusting device to be designed dimensionally in such a way that it can be arranged on the motor vehicle in a similar manner to a gas spring used for opening the tailgate.

This object is achieved according to the invention by the features of Claim 1. Further, particularly advantageous embodiments of the invention are disclosed in the subclaims.

The invention is based essentially on the idea of using an adjusting device having a spindle drive, in that this device comprising a one-piece tubular guide part for guiding the spindle nut. The said tubular guide part encloses the spindle nut laterally, in that the lateral wall of the guide part is provided internally with a guide contour which extends in the axial direction and in which an outer guide contour of the spindle nut engages. The tubular guide part has at its front a peripheral, inwardly directed bead-shaped projection which limits the displacement of the spindle nut

In order to ensure that the spindle nut is guided in as play-free a manner as possible, the inwardly directed bead-shaped projection which limits the extended position of the spindle nut is designed in such a way that it supports the spindle nut laterally during its axial movement.

Such a tubular guide part, having an integrated guide contour and an integrated inwardly directed bead-shaped projection to limit the displacement of the spindle nut, can be produced relatively cost-effectively by means of known forming techniques in which, for example, a precision steel tube is correspondingly formed without cutting in a number of steps.

To provide uniform guidance of the spindle nut, it has proved advantageous if the guide contour of the guide part comprises a plurality of recesses which are distributed uniformly over the circumference of the lateral wall of the tubular guide part and which have an arrangement in the form of an internal geared wheel. The spindle nut, comprises in this case a plurality of guide lugs which are distributed uniformly over the circumference, with the result that the spindle nut has a cross section in the approximate form of a toothed wheel in the region of the guide lugs.

In one embodiment of the invention, the adjusting device comprising a one-piece spindle nut provided with guide lugs and having the form of a tubular push rod which extends in the direction of the longitudinal axis of the spindle. This push rod region of the spindle nut then acts directly or via a corresponding connecting part on a part of the motor vehicle that is to be adjusted, that is to say, for example, the tailgate of the motor vehicle.

Such a spindle nut having an integrated push rod and an integrated guide lug etc. can also be produced relatively cost-effectively by means of known forming techniques in which, for example, a precision steel tube is correspondingly formed without cutting in a number of steps. Since the push rod replacing the linkage of conventional drives is a part of the spindle nut in this case, not only can the overall arrangement be produced in a very compact manner but the problems which frequently occur during axial force transmission of separate components are also eliminated.

As has been shown in practical tests, it is generally sufficient if the spindle nut is provided only in a partial region with an internal thread which engages with the spindle. In this regard, the width of the partial region of the internal thread should correspond at least to the diameter of the spindle. Furthermore, it has proven advantageous if the partial region of the spindle nut that is provided with the internal thread is situated at the end of the spindle nut that faces the electric-motor drive.

To allow cost-effective production of the spindle drive and trouble-free force transmission, it has proved advantageous if the coupling part of the spindle nut that is, where appropriate, required for coupling to a connecting part (for example an angle joint) is likewise connected in one piece to the spindle nut, i.e. is incorporated into the steel tube forming the spindle nut by means of a corresponding forming process.

Further details and advantages of the invention will become apparent from the exemplary embodiments explained below with reference to figures, in which:
Figure 1 shows a schematic view of the tail region of a motor vehicle with an opened tailgate and a laterally arranged adjusting device according to the invention;
Figure 2 shows a longitudinal section through the adjusting device according to the invention represented in Figure 1, having a spindle drive comprising a spindle nut and a tubular guide part;
Figure 3 shows a longitudinal section through the spindle nut of the spindle drive represented in Figure 2;
Figure 4 shows a side view of the spindle nut from the viewing direction indicated by IV in Figure 3;
Figure 5 shows a tubular guide part, represented partially in section, of the spindle drive represented in Figure 2;
Figure 6 shows a side view of the guide tube from the viewing direction indicated by VI in Figure 5,

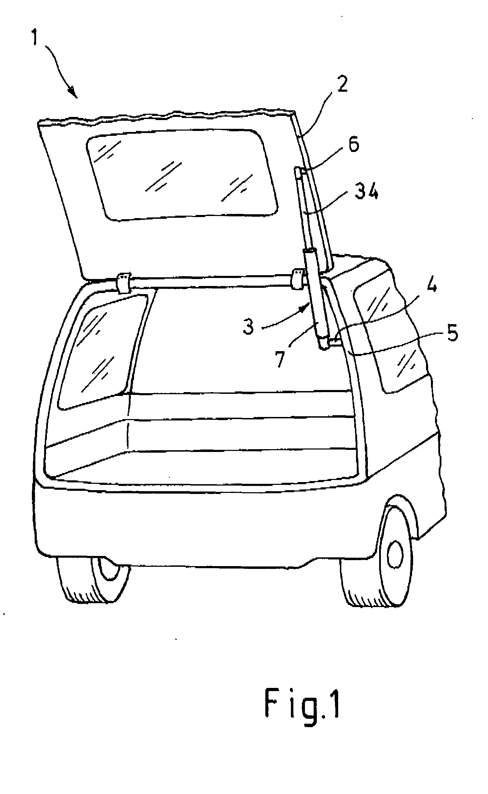

Figure 1 indicates by 1 a motor vehicle which has a tailgate 2 which can be pivoted by an adjusting device 3 according to the invention from a closed position into the opened position represented in Figure 1 and, if appropriate, into the closed position again. The adjusting device 3 according to the invention is in this case connected via a first angle joint 4 to the body 5 of the motor vehicle 1 and via a second angle joint 6 to the tailgate 2. It therefore replaces the gas springs conventionally provided for opening the tailgate 2 in motor vehicles.

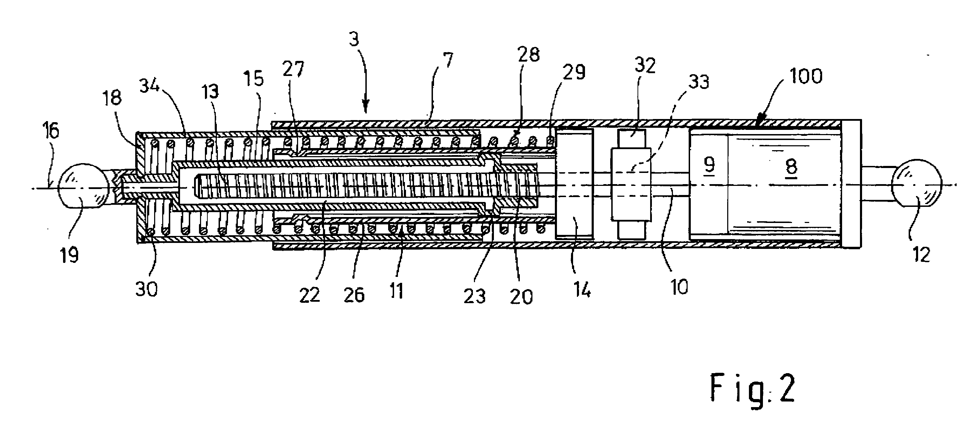

As can be gathered from Figure 2, the adjusting device 3 comprises a tubular housing 7 in which there is situated an electric-motor drive 100 consisting of an electric motor 8 and of a non-self-locking transmission gear unit 9 connected axially downstream. A spindle drive 11 is connected to the output shaft 10 of the electric-motor drive 100.

A first ball socket 12 is fastened laterally to the motor end of the housing 7, this ball socket being a part of the first angle joint 4 that is to be fastened to the adjusting device 3.

The spindle drive 11 is composed of a spindle 13 which consists of steel, the spindle being guided laterally on its side facing the transmission gear unit 9 in a spindle bearing 14 connected to the housing 7, and of a spindle nut 15 which likewise consists of steel.

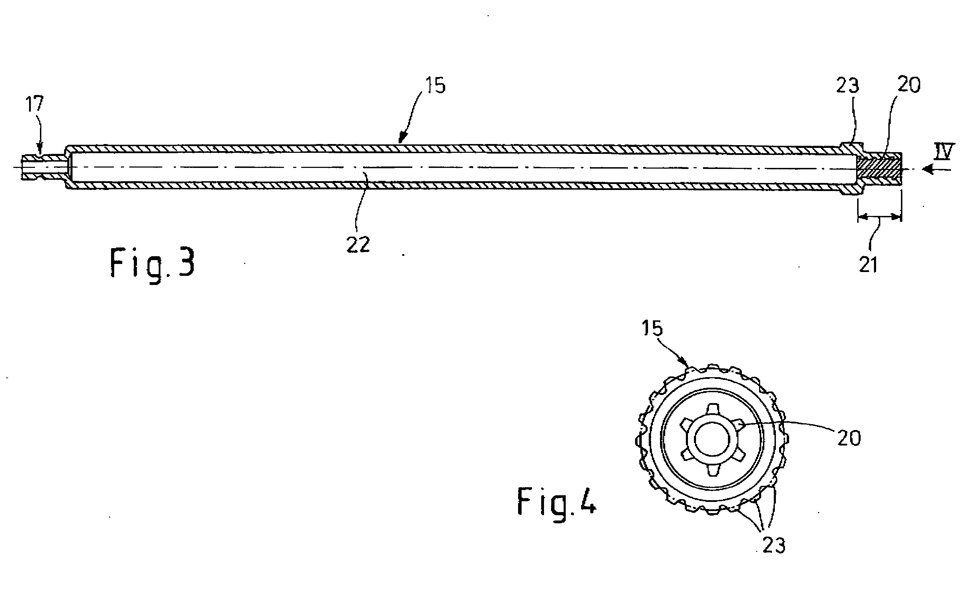

The spindle nut 15 is of one-piece design according to the invention and has the form of a tubular push rod (Figure 3) which extends in the direction of the longitudinal axis 16 of the spindle 13, the said push rod projecting beyond the front of the spindle 13. In this case, the front end 17 of the spindle nut 15 is designed as a coupling part to which both a disc-shaped stop 18 and a second ball socket 19 are fastened (Figure 2). The ball socket 19 is a part of the second angle joint 6 that is to be fastened to the adjusting device 3.

In the region of its end facing the electric-motor drive 100, the spindle nut 15 has an internal thread 20 engaging with the spindle 13. This thread has, when viewed in the direction of the longitudinal axis 16, a width 21 which corresponds approximately to 2.5 times the diameter of the spindle 13.

The region of the spindle 13 that extends in front of the internal thread 20 of the spindle nut 15 in the tubular cavity 22 of the spindle nut is arranged in a self-supporting manner.

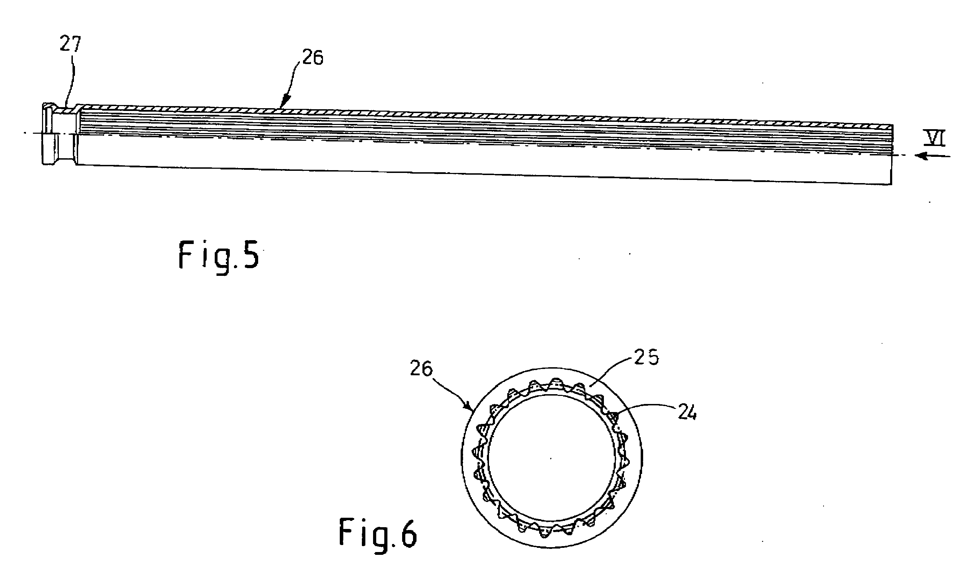

The spindle nut 15 is guided by providing the latter with a plurality of guide lugs 23 which are distributed uniformly over the outer circumference of the spindle nut and which have an arrangement in the form of a toothed wheel (Figure 4). These guide lugs 23 engage internally in corresponding recesses 24 in the lateral wall 25 of a tubular guide part 26 (Figures 5 and 6) which is provided for guiding the spindle nut 15, this guide part enclosing the spindle nut 15 and being fastened to the spindle bearing 14.

The tubular guide part 26 has at its front a peripheral, inwardly directed bead-shaped projection 27 which stops the displacement of the spindle nut 15 from its rest position (Figure 2) into its extended position (Figure 1) as soon as the guide lugs 23 come up against this projection 27. Moreover, the projection 27 can be designed in such a way that it causes the spindle nut 15 to be guided during its displacement along the longitudinal axis 16.

As can be gathered from Figure 2, the tubular guide part 26 is enclosed by a cylindrical spring 28 which is supported by its first end 29 on the spindle bearing 14 and by its second end 30 on the stop 18. The cylinder spring 28 here is prestressed in the rest position of the spindle nut 15, which is represented in Figure 2.

The cylindrical spring 28 is enclosed externally by a protective tube 34 which not only conceals the cylindrical spring 28 externally (screening cover) but also prevents the cylindrical spring 28 from buckling and protects the interior of the adjusting device 3 from harsh external influences. On the one hand, the protective tube 34 is fixedly connected to the disc-shaped stop 18 and, on the other hand, is arranged so that it can be displaced axially in the housing 7.

The spring constant of the cylindrical spring 28 is selected such that, with the electric-motor drive 100 deactivated and the tailgate 2 in a partially open position, the tailgate is not opened on account of the frictional forces (for example of the spindle drive, of the transmission gear unit and of a braking device 32) directed counter to the cylindrical spring but remains in the partially open position. Since, however, the prestressed cylindrical spring 28 assists the opening movement of the tailgate 2, only a relatively small force is required when activating the electric-motor drive 100 to actuate the tailgate 2 into its opened position. The amount of force required for the electric-motor drive 100 to close the tailgate 2 is also relatively small with the aforementioned design of the cylindrical spring 28.

In order to ensure, when the electric-motor drive 100 is switched off, that the tailgate 2 does not change its position even when the vehicle is in different positions (for example on a slope), the adjusting device 3 may additionally be provided with a controllable braking device 32 (the control device, for example an electronic control device, has not been represented for reasons of clarity), this braking device acting on a shaft section 33 situated between the electric-motor drive 100 and the spindle drive 11.

It is possible by corresponding control of the braking device 32 to compensate both for the travel-dependent force profile of the cylindrical spring 28 and for the weight which is dependent on the pivoting position of the tailgate 2, so that it is in each case ensured that the tailgate 2 remains in its respective position when the electric-motor drive 100 is switched off.

In order to determine the respective position of the tailgate in such a case for the purpose of determining the braking force, a corresponding sensor (not shown) may be provided in the adjusting device 3, this sensor consisting for example of a magnetic encoding disc rotatably connected to the motor shaft and of housing-mounted Hall sensors. In this case, the sensor can be arranged either between the electric-motor drive 100 and the spindle drive 11 or (for example for reasons of space) on that side of the electric motor 8 facing away from the transmission gear unit 9 if an electric motor 8 with a continuous motor shaft is used.

The mode of operation of the adjusting device 3 according to the invention represented in Figure 2 will be discussed below. It will be assumed here that the spindle nut 15 is in the rest position represented in Figure 2. In this position, the tailgate 2 of the motor vehicle 1 is closed and the cylindrical spring 28 is under maximum prestress.

If the tailgate 2 of the motor vehicle 1 is now to be opened, the electric-motor drive 100 is activated and actuates the spindle 13. This causes the spindle nut 15 to be displaced in a forward direction along the guides 24 of the tubular guide part 26, the cylindrical spring 28 assisting this opening movement of the tailgate 2. This operation is continued until the electric-motor drive 100 is switched off (for example manually or by means of a remote control) by means of a limit switch (not shown) after reaching the completely opened position of the tailgate 2.

Since the protective tube 34 surrounding the cylindrical spring 28 is fastened to the disc-shaped stop 18, this tube is likewise displaced therewith in a forward direction and reliably prevents the cylindrical spring 28 from buckling laterally. Nevertheless, the protective tube 34 remains in the housing 7 on the tail side even when the spindle nut 15 is in the extended (slided) position.

If the tailgate 2 is then to be closed again, the electric-motor drive 100 is activated in such a way that the direction of rotation of the motor shaft of the electric-motor drive 100 is reversed and the spindle 13 rotates in the opposite direction.

Once the tailgate 2 is completely closed, a corresponding limit switch (not shown) is used to switch off the electric-motor drive 100 again.

It goes without saying that the invention is not restricted to the above-described exemplary embodiment. Thus, for example, the cylindrical spring and possibly also the braking device may be dispensed with if the vehicle door is additionally provided with a gas spring which ensures a constant force profile.

However, provision may also be made for the tailgate of the corresponding motor vehicle to be able to be actuated by two adjusting devices which, in a similar manner to the conventional gas springs, are arranged on opposite sides of the vehicle or of the tailgate.

The adjusting device according to the invention may also be designed for actuating a side door of a motor vehicle. It is also conceivable to arrange the adjusting device in the hinge-shaft region of the tailgate or for actuation of a sliding roof.

Moreover, automatic seat adjustment is also possible by means of the adjusting device according to the invention.

However, in order to transmit the relatively large forces while at the same time having a compact construction for the spindle drive, it is always the case according to the invention that the spindle nut formed as a push rod and preferably also the tubular guide part are of one-piece design.

The width of the partial region of the spindle nut that is provided with the internal thread may not only be less than 2.5 times the diameter of the spindle but also significantly greater, although the width should generally not be smaller than the diameter of the spindle. Moreover, it is also possible for there to be a plurality of non-contiguous partial regions provided with an internal thread.

Instead of using limit switches to switch off the electric-motor drive, it is also possible to switch off the drive automatically by means of a corresponding electronic control device. For this purpose, a sensor arranged in the region of the motor shaft measures the respective position of the tailgate or motor shaft (for example by measuring the number of pulses which are produced by a stationary magnetic detector during the rotation of a magnetic disc fastened to the motor shaft, and comparing this number with previously measured reference values stored in a memory of the control device).

The housing of the adjusting device has by no means to be a one-part housing. Instead, it may be particularly expedient to use a two-part or multi-part housing for mounting the adjusting device.

It is possible to provide such guide contour 24 on one of the tubular cover 7 or 34 while the other one of the two 7, 34 comprises the at least one guide lug 23 cooperating with said guide contour 24.

In that case, It is possible to withdrawn the guide part 26 since the axial guidance of the spindle nut 15 is provided by the two covers 7, 34.

It should be noted that the adjusting device avoids the need to block in rotation, in order to provide the correct forward/backward movement, at the front end 17 of the spindle nut 15. This latter solution, i.e. where the block in rotation is made at the front end 17 of the spindle nut 15 leads to a weakness of the structure and possible breakage or splintering of the device due to the important torsion forces acting between the front end 17 of the spindle nut 15 and the disc-shaped stop 18.

Furthermore, the guide part 26 provides the adjusting device a better reliability in flexion since it increases the contact surface between said guide part 26, i.e. the whole structure assembly through the spindle bearing 14 to which the guide part 26 is linked, and the spindle nut 15. This function is provided by the longitudinal form of said guide part 26 enclosing the spindle nut 15.

The guide part 26 and at least one guide lug 23 of the spindle nut 15 allows axial guidance of the spindle nut 15 via the guide contour 24.

Furthermore, it is also possible to provide a spindle actuator in which there is still the guide part 26 shown in the first embodiment described above, and represented on the appended figures, while both covers 7, 34 also comprise guide contour 24 and corresponding guide lug 23 to allow axial guidance between them.

In another possible embodiment, while the two covers 7, 34 are provided with said guide contour 24 and guide lug 23, the guide part 26 as shown in the appended figures is not present.

## Claims

1. Adjusting device having a spindle drive (11), in particular for automatically actuating the vehicle door (2) of a motor vehicle (1), the spindle drive (11) comprising a spindle (13), which can be rotated by an electric-motor drive (100), and a guide nut (15) which, when the spindle (13) is rotated, can be displaced along the longitudinal axis (16) of the spindle (13) in a guide (24), from a retracted rest position into an extended position, **characterized in that** the spindle nut (15) is guided by a tubular guide part (26), the said tubular guide part (26) encloses the spindle nut (15) laterally, **in that** the lateral wall (25) of the guide part (26) is provided internally with a guide contour (24) which extends in the axial direction and in which at least one guide lugs (23) of the spindle nut (15) engage.

2. Adjusting device according to claim 1, **characterized in that** the tubular guide part (26) has at its front a peripheral, inwardly directed bead-shaped projection (27) which limits the displacement of the spindle nut (15).

3. Adjusting device according to claim 1 or 2, **characterized in that** the guide contour (24) of the guide part (26) comprises a plurality of recesses (24) which are distributed uniformly over the circumference of the lateral wall (25) of the tubular guide part (26) and which have an arrangement in the form of an internal geared wheel.

4. Adjusting device according to one of the previous claims, **characterized in that** the projection (27) is designed in such a way that it supports the spindle nut (15) laterally during its axial movement.

5. Adjusting device according to claim 1, **characterized in that** spindle nut (15) is of one-piece design and has the form of a tubular push rod which extends in the direction of the longitudinal axis (16) of the spindle (13), the said push rod projecting in its rest position beyond the front of the spindle (13) and being provided with a coupling part (17) which can be arranged on a connecting part (6) for attaching the spindle nut (15) to a part (2) of the motor vehicle (1) that is to be adjusted, and **in that** the spindle nut (15) bears on its outer side at least one guide lug (23) which engages in the guide (24).

6. Adjusting device according to claim 5, **characterized in that** the spindle nut (15) is provided only in a partial region with an internal thread (20) which engages with the spindle (13).

7. Adjusting device according to claim 6, **characterized in that** the width (21) of the partial region of the spindle nut (15) that is provided with the internal thread (20) corresponds at least to the diameter of the spindle (13).

8. Adjusting device according to claim 6 or 7, **characterized in that** the partial region of the spindle nut (15) that is provided with the internal thread (20) is situated at the end of the spindle nut (15) that faces the electric-motor drive (100).

9. Adjusting device according to claim 4, **characterized in that** the coupling part (17) is likewise connected in one piece to the spindle nut (15).

10. Adjusting device according to claim 2 and one of claims 5 to 8, **characterized in that** the spindle nut (15) is guided by providing the latter with a plurality of guide lugs (23) which are distributed uniformly over the circumference and which are arranged in the form of a toothed wheel.

11. Adjusting device according to one of claims 1 to 10, **characterized in that** the tubular guide part (26) and or the spindle nut (15) consist of steel.

12. Adjusting device according to one of claims 1 to 11, **characterized in that** the electric-motor drive (100) and the spindle drive (11) connected downstream thereof are arranged axially one behind the other in a tubular housing (7).

13. Adjusting device according to one of the claims 1 to 12, **characterized in that** the tubular guide part (26) is of one-piece design.

14. Spindle actuator unit according to one of the previous claims, **characterized in that** it comprises an adjusting device according to one of claims 1 to 13.
